(19) Europäisches Patentamt

European Patent Office

Office européen des brevets

(11) **EP 1 370 896 B1**

(12) **EUROPÄISCHE PATENTSCHRIFT**

(45) Veröffentlichungstag und Bekanntmachung des Hinweises auf die Patenterteilung:
**02.08.2006  Patentblatt 2006/31**

(21) Anmeldenummer: **02732497.9**

(22) Anmeldetag: **19.03.2002**

(51) Int Cl.:
***G02B 27/09*** (2006.01)

(86) Internationale Anmeldenummer:
**PCT/EP2002/002988**

(87) Internationale Veröffentlichungsnummer:
**WO 2002/086592 (31.10.2002 Gazette 2002/44)**

(54) **ELEMENT ZUR KOMBINIERTEN SYMMETRISIERUNG UND HOMOGENISIERUNG EINES STRAHLENBÜNDELS**

ELEMENT FOR THE COMBINED SYMMETRIZATION AND HOMOGENIZATION OF A BUNDLE OF BEAMS

ELEMENT DE SYMETRISATION ET D'HOMOGENEISATION COMBINEES D'UN FAISCEAU DE RAYONS

(84) Benannte Vertragsstaaten:
**DE FR GB IT**

(30) Priorität: **20.03.2001   DE 10113572**
**04.05.2001   DE 10121747**

(43) Veröffentlichungstag der Anmeldung:
**17.12.2003   Patentblatt 2003/51**

(73) Patentinhaber: **Thomson Licensing**
**92100 Boulogne-Billancourt (FR)**

(72) Erfinder: **BRENNER, Karl-Heinz**
**68309 Mannheim (DE)**

(74) Vertreter: **Thies, Stephan**
**Deutsche Thomson-Brandt GmbH,**
**European Patent Operations,**
**Karl-Wiechert-Allee 74**
**30625 Hannover (DE)**

(56) Entgegenhaltungen:
| | |
|---|---|
| **EP-A- 0 987 577** | **US-A- 3 476 463** |
| **US-A- 4 475 027** | **US-A- 5 148 317** |
| **US-A- 5 499 262** | **US-A- 6 008 941** |

EP 1 370 896 B1

## Beschreibung

Die Erfindung betrifft ein Element zur kombinierten Symmetrisierung und Homogenisierung eines Strahlenbündels sowie ein Verfahren zum Entwurf eines derartigen Elements.

In der Optik tritt des öfteren das Problem auf, daß ein vorhandenes Strahlenbündel mit inhomogener Intensitätsverteilung in ein Strahlenbündel einer anderen Intensitätsverteilung umgeformt werden soll. So besitzt das Licht von Halbleiterlasern wegen der Entstehung im Resonator eine Helligkeitsverteilung, die zum Rand hin stark abfällt. Man spricht von einer gaußförmigen Verteilung, die die Form einer Glockenkurve besitzt. Da der Resonator in der Regel in x- und y-Richtung nicht symmetrisch ist, ist die Breite der Glockenkurve in beiden Richtungen stark unterschiedlich. Typischerweise ist das Breitenverhältnis in x- und y-Richtung etwa 1:3.

Für die sogenannte Stahlformung kommen prinzipiell diffraktive und refraktive Verfahren in Frage. Diffraktiv heißt "beugend" und die Lichtablenkung wird hier durch gitterartige Strukturen erreicht. Vorteil der diffraktiven Elemente ist, daß hinsichtlich des Designs keine Einschränkungen existieren und somit beliebige Funktionen erreicht werden können. Gravierender Nachteil der diffraktiven Strukturen ist die extreme Winkel-und Wellenlängenabhängigkeit der Beugung. Refraktive Strukturen erreichen die Strahlablenkung durch Brechung an Grenzflächen. Diese ist weitgehend winkel- und wellenlängenunabhängig. Die Entwurfsverfahren für refraktive Elemente unterliegen gewissen Einschränkungen und sind daher nur für einige Spezialfälle der Strahlformung gelöst.

Die Unsymmetrie der Lichtverteilung von Halbleiterlasern wird bisher durch sogenannte astigmatische Korrekturelemente behoben. Dies wird als Symmetrisierung oder Zirkularisierung bezeichnet. Hierbei handelt es sich meist um eine Kombination aus zwei hintereinander angeordneten Zylinderlinsen. Die gaußförmige Helligkeitsverteilung wird in der Regel nicht kompensiert, d.h. eine Homogenisierung wird nicht vorgenommen. Dort, wo eine Homogenisierung erforderlich ist, wird sie durch sphärische Linsenkombinationen oder durch Strahlformungselemente erreicht. Ziel ist es dabei, die gaußförmige Lichtverteilung in ein sogenanntes flat-top-Profil zu verwandeln, das innerhalb eines kreisförmigen Bereichs eine flache Helligkeitsverteilung besitzt. Die Kombination der Funktionen Homogenisierung und Symmetrisierung in einem einzigen refraktiven Element ist bisher noch nicht bekannt.

Die bekannten Verfahren zur Symmetrisierung sind in der Montage sehr aufwendig. Zunächst werden qualitativ hochwertige Zylinderlinsen benötigt, die dann in vier Freiheitsgraden positioniert werden müssen: Das Linsenzentrum der ersten Linse muß zunächst auf die optische Achse gebracht werden. Dann muß das Linsenzentrum der zweiten Linse auf die optische Achse gebracht werden. Die Linsen müssen weiterhin zueinander im richtigen Abstand stehen und zueinander im richtigen Drehwinkel plaziert werden.

Die Kombination der Funktionen von Symmetrisierung und Homogenisierung würde zwei weitere Positionierfreiheitsgrade erfordern. Es wären hierfür 4 Komponenten erforderlich. Somit treten 8 Grenzflächen auf, die einzeln entspiegelt werden müßten, um einen Reflektionsverlust von $(1.00 - 0.96^8 = 28\%)$ zu vermeiden. Durch die Entspiegelung treten weitere Farbeffekte auf.

Aus der US-A-3,476,463 ist ein Zwei-Elemente-System bekannt, das Strahlen eines kohärenten Strahlenbündels in ein Strahlenbündel einer anderen vorgegebenen Intensitätsverteilung umformt. Nachteilig an dieser bekannten Lösung ist, daß sie nur für kohärente Strahlenbündel und für eine rotationssymmetrische Verteilung des Ausgangsstrahlenbündels geeignet ist.

Die Drukschrift EP-A-0 987 577 zeigt ein weiterer Phasenelement zur Umwandlung einer gaußförmigen Lichtverteilung in ein flat-top-Profil.

Eine Aufgabe der vorliegenden Erfindung ist es, ein Element und ein entsprechendes Entwurfsverfahren vorzuschlagen, mittels dessen aus einem Strahlenbündel mit inhomogener Intensitätsverteilung ein Strahlenbündel mit beliebiger Intensitätsverteilung geformt wird. Insbesondere soll ein Strahlenbündel mit elliptischer Intensitätsverteilung in eines mit einer anderen elliptischen Intensitätsverteilung umgeformt werden.

Gelöst wird diese Aufgabe durch ein Beleuchtung system gemäß Anspruch 1 und ein Entwanfs verfahren gemäß Anspruch 4.

Das erfindungsgemäße Phasenelement ermöglicht es, ein Strahlenbündel mit inhomogener Intensitätsverteilung, die im allgemeinen nicht rotationssymmetrisch ist, in eines mit beliebiger Intensitätsverteilung zu formen. Die Strahlung kann hier sowohl elektromagnetische Strahlung sein, insbesondere Licht, als auch eine andere Form gerichteter Strahlung, beispielsweise Teilchenstrahlung. Das Phasenelement kann dabei erfindungsgemäß sowohl ein refraktives Phasenelement sein, was den Vorteil einer größeren Wellenlängen- und Winkelunabhängigkeit hat, als auch ein diffraktives Phasenelement, was den Vorteil größerer Designfreiheit hat. Die Ausgangs-Intensitätsverteilung ist insbesondere elliptisch, während die Ziel-Intensitätsverteilung ebenfalls in allgemeiner Form elliptisch ist. Speziellere Varianten der Ziel-Intensitätsverteilung sind dabei rotationssymmetrisch, elliptisch mit geändertem Halbachsenverhältnis oder elliptisch mit rotierten Hauptachsen.

Das Phasenelement ist dabei so ausgelegt, daß es die Dichteverteilung der Strahlen des Strahlenbündels in die gewünschte Dichteverteilung ändert. Optional bewirkt ein weiteres optisches Element, im folgenden Korrekturelement genannt, eine Parallelisierung der Strahlen des Strahlenbündels, sofern dies erwünscht ist. Auch das Korrekturelement kann sowohl diffraktiv als auch refraktiv ausgelegt sein. Sowohl diffraktive als auch refraktive Elemente sind im allgemeinen als Transmissionselement vorgesehen, eine Auslegung als Reflexionselement liegt aber ebenfalls im Rahmen der Erfindung.

Es wird als ein Beispiel eine optische Komponente einschließlich Entwurfsverfahren beschrieben, die zusätzlich zur Homogenisierung auch die Aufgabe der Zirkularisierung übernimmt. Eine derartige Komponente unterscheidet sich meßbar von Komponenten zur alleinigen Homogenisierung, sie ermöglicht gleichzeitige Homogenisierung und Zirkularisierung bei geringstem Lichtverlust und geringster Baugröße.

Vorteile der Erfindung ergeben sich daraus, daß die überwiegende Anzahl von Halbleiterlasern Kantenemitter sind und daher fertigungsbedingt ein stark asymmetrisches Strahlprofil aufweisen. Ebenso trifft dies auf Laserarrays zum Pumpen von Hochleistungslasern zu. Typischerweise verwendet man allein für die Zirkularisierung mindestens zwei Zylinderlinsen.

Das erfindungsgemäße Entwurfsverfahren zum Bestimmen der Phasenverteilung eines Phasenelements, welches ein Strahlenbündel einer ersten, insbesondere elliptischen Verteilung in eines einer zweiten elliptischen Verteilung umwandelt, besteht erfindungsgemäß aus zumindest zwei sequentiellen Transformationen, von denen eine Transformation eine meridionale Transformation ist und die anderen lineare Transformationen mit konstanter Determinante sind. Dies kann sowohl eine einzige lineare Transformation sein als auch eine Sequenz mehrerer linearer Transformationen mit konstanter Determinante sein. Erfindungsgemäß reicht Beachtung dieser Bedingungen aus, die gewünschte Phasenverteilung zu bestimmen.

Eine bevorzugte Variante besteht erfindungsgemäß aus zwei sequentiellen Transformationen, wobei die erste äquidistante Radiensegmente auf nicht-äquidistante Radiensegmente transformiert und die zweite Ringsegmente der ersten Verteilung auf Ringsegmente der zweiten Verteilung transformiert. Vorteilhafterweise wird durch die erste Transformation die Homogenisierung erzielt und eine definierte Ausgangssituation für die durch die zweite Transformation erzielte Symmetrisierung geschaffen. Die Zielverteilung der ersten Transformation kann sowohl eine homogene Strahlendichteverteilung sein als auch eine nicht-gleichförmige, aber gezielt vorgegebene Dichteverteilung der Strahlen eines Strahlenbündels. Auch letzteres soll hier unter dem Begriff "Homogenisierung" verstanden werden. In vielen Fällen wird die Ausgangsverteilung der Strahlendichte kreisförmige oder elliptische Symmetrie aufweisen, aber auch nicht-elliptische Ausgangsverteilungen werden mittels der ersten Transformation in eine elliptische Zwischen-Verteilung transformiert. Mittels der zweiten Transformation wird die Zwischen-Strahlendichteverteilung, die eine erste elliptische Verteilung ist, in eine zweite elliptische Verteilung, die Ziel-Strahlendichteverteilung, transformiert. In vielen Fällen ist die zweite elliptische Verteilung eine rotationssymmetrische Verteilung. Das Entwurfsverfahren ermöglicht es aber ebenfalls, eine Ziel-Strahlendichteverteilung einer anderen elliptischen Symmetrie, beispielsweise mit geändertem Halbachsenverhältnis oder mit im Vergleich zur ersten elliptischen Verteilung gedrehten Halbachsen zur erzielen.

Erfindungsgemäß ist vorgesehen, die optische Leistung je korrespondierendem Radiensegment bzw. Ringsegment konstant zu halten. Die Radien- bzw. Ringsegmente werden dabei jeweils so in ihrer Größe gewählt, daß die optische Leistung konstant bleibt. Dies hat den Vorteil, daß die vom Laser emittierte Lichtmenge nahezu vollständig in das optische System eingebracht wird.

Erfindungsgemäß ist die radiale Ausdehnung der Ziel-Dichteverteilung der Transformation frei wählbar. Dies hat den Vorteil, daß, je größer deren radiale Ausdehnung, desto kleiner ihre Intensität und entsprechend geringer der maximale Phasenhub ist. Dies gilt für kleinere radiale Ausdehnung entsprechend umgekehrt. Das Phasenelement ist somit für große radiale Ausdehnung der Ziel-Strahlendichteverteilung einfacher herstellbar, da der Phasenhub gering ist. Für kleinere radiale Ausdehnungen ist ein Phasenelement kleineren Durchmessers wählbar, für welches dann ein größerer Phasenhub einzustellen ist.

Erfindungsgemäß ist der Abstand zwischen dem Phasenelement und einer Ebene, in der die Ziel-Strahlendichteverteilung erreicht wird, frei wählbar. Dies hat den Vorteil, daß bei großem Abstand ein kleiner Gradient der Phase auftritt, wodurch das Phasenelement kostengünstiger herstellbar ist. Ein weiterer Vorteil liegt darin, daß der Unterschied zwischen strahlenoptischer und wellenoptischer Betrachtung bei geringem Phasengradienten gering ist, und somit nur geringe Abweichungen vom idealen Ergebnis zu erwarten sind. Umgekehrt kann der Abstand um so kleiner gewählt werden, je größer der zulässige Gradient ist. Dies hängt sowohl von den Herstellungsmöglichkeiten als auch von den tolerierbaren Abweichungen ab.

Das hier vorgeschlagene Verfahren reduziert die Anzahl der Bauelemente. Daraus ergeben sich folgende Konsequenzen: Es sind weniger Grenzflächen und damit Störungen des Strahlenganges vorhanden, ein geringerer Montageaufwand ist erforderlich und ein niedrigeres Gewicht wird erreicht.

Das Entwurfsverfahren kann im Prinzip wie folgt beschrieben werden: Die Phasenverteilung des Phasenelements wird wie folgt bestimmt:

- Darstellung der Ausgangs-Strahlendichteverteilung in Polarkoordianten $(r, \varphi)$
- Darstellung der Zwischen-Strahlendichteverteilung in Polarkoordinaten $(\rho, \psi)$
- Annahme: Strahlen werden nur in meridionaler, nicht in azimutaler Richtung abgelenkt, d.h. $\varphi = \psi$

- Berechnen einer $\varphi$-abhängigen ersten Transformationsfunktion $f_\varphi : r \to \rho$ so, daß die optische Leistung P in korrespondierenden radialen Abschnitten gleich ist:

$$I_0(r,\varphi) \; r \; dr \; d\varphi = I_1(\rho,\varphi)\rho \; d\rho \; d\varphi$$

- Berechnen einer zweiten Transformationsfunktion, die eine erste elliptische Verteilung in eine zweite elliptische Verteilung transformiert
- Daraus läßt sich eine Beziehung für die Ableitung der Phase des Elementes nach dem Radius $\partial\Phi(r, \varphi)/\partial r$ ermitteln
- Durch Integration erhält man die gesuchte Phase des Phasenelments

Die Phasenverteilung des optionalen Korrekturelements wird wie folgt bestimmt:

- Wellenoptische Berechnung der Lichtausbreitung nach dem Phasenelement bis zu einer vorbestimmten Homogenisierungs-Distanz $z_H$.
- Dadurch ergibt sich die Phase der Lichtverteilung bei $z_H$: $\Phi_1(r,\varphi)$
- Die Phase des Korrekturelements ergibt sich dann durch komplexe Konjugation: $\Phi_2(r,\varphi) = \Phi_1^*(r,\varphi)$.

Der erfindungsgemäße Algorithmus ist auf spezielle Aufgaben anpaßbar und liefert im Ergebnis eine refraktive optische Struktur, die nahezu verlustlos einen asymmetrischen Gaußstrahl in eine rotationssymmetrische flat-top-Verteilung wandelt.

Alternativ ist dazu vorgesehen, die Dichteänderung in azimutaler Richtung vorzunehmen, um eine gaußförmige oder auch eine nicht-gaußförmige Verteilung in eine repräsentative Verteilung umzuformen, wie beispielsweise eine Supergauß-Verteilung. Alternativ ist vorgesehen, durch Dichteänderung in r- und y-Richtung eine rotationssymmetrische oder auch eine nicht-rotationssymmetrische Verteilung in eine in r, $\varphi$ beziehungsweise x, y homogene Verteilung umzuformen.

Gegenstand der Erfindung ist ein Phasenelement zur gleichzeitigen Homogenisierung und Zirkularisierung unsymmetrischer gaußförmiger Intensitätsverteilungen und ein Verfahren zur Berechnung eines derartigen Phasenelements.

Anwendungen der Erfindung sind Strahlhomogenisierung und Strahlformung für Halbleiterlaser mit anisotroper Intensitätsverteilung für die Beleuchtung optischer Systeme aber auch andere, wie die Strahlformung für die Materialbearbeitung technischer wie biologischer Materialien.

Besondere Merkmale sind: Es handelt sich um ein analytisches Entwurfsverfahren ohne Näherung. Die Aufgaben der Homogenisierung und Zirkularisierung werden durch eine einzige Tandemkomponente erfüllt. Bisherige Praxis ist es, ein anisotropes Strahlprofil zunächst durch eine Kombination von Zylinderlinsen zu zirkularisieren. Freie Parameter können gemäß der Erfindung genutzt werden, um die Herstellbarkeit und Justagetoleranz zu optimieren. Die Tandemkomponente ist vorzugsweise ein plan/asphärisches Phasenelement und bewirkt eine ortsabhängige Ablenkung von Teilstrahlen. Alternativ ist vorgesehen, ein sphärisch/asphärisches Phasenelement vorzusehen, was den Vorteil hat, einen größeren Phasenhub zu ermöglichen und das dennoch kostengünstig herstellbar ist, da zumindest eine Seite eine Standardform aufweist. Gegebenenfalls ist auch ein doppelt asphärisches Phasenelement vorgesehen, wenn besonders großer Phasenhub oder Phasengradient auszugleichen ist. Das Korrekturelement ist vorzugsweise ein plan/aspärisches Phasenelement, das gegebenenfalls mit einem weiteren Element, vorzugsweise einem Kollimator, kombiniert oder einstückig ausgeführt ist. Es steht in einer gewissen Entfernung vom ersten Teilelement entlang der Ausbreitungsrichtung des Strahlenbündels. Es bewirkt die parallele Ausrichtung der Teilstrahlen. Eine fertige Tandemkomponente unterscheidet sich in ihrer optischen Dicke meßbar von anderen üblichen Komponenten zur Homogenisierung.

Weitere Vorteile und Varianten der Erfindung sind auch der nachfolgenden Beschreibung von Ausführungsbeispielen entnehmbar. Dabei zeigen:

Fig. 1       Gerät mit Phasenelement, das nicht zur Erfindung gehört

Fig. 2       Strahlquerschnitt vor und nach einem erfindungsgemäßen Phasenelement

Fig. 3       meridionale Umverteilung

Fig. 4       erste Transformation

Fig. 5        zweite Transformation

Fig. 6        Berechnete Phasenverteilung

Fig. 7        Ausgangs-Intensitätsverteilung

Fig. 8-11     Ziel-Intensitätsverteilung

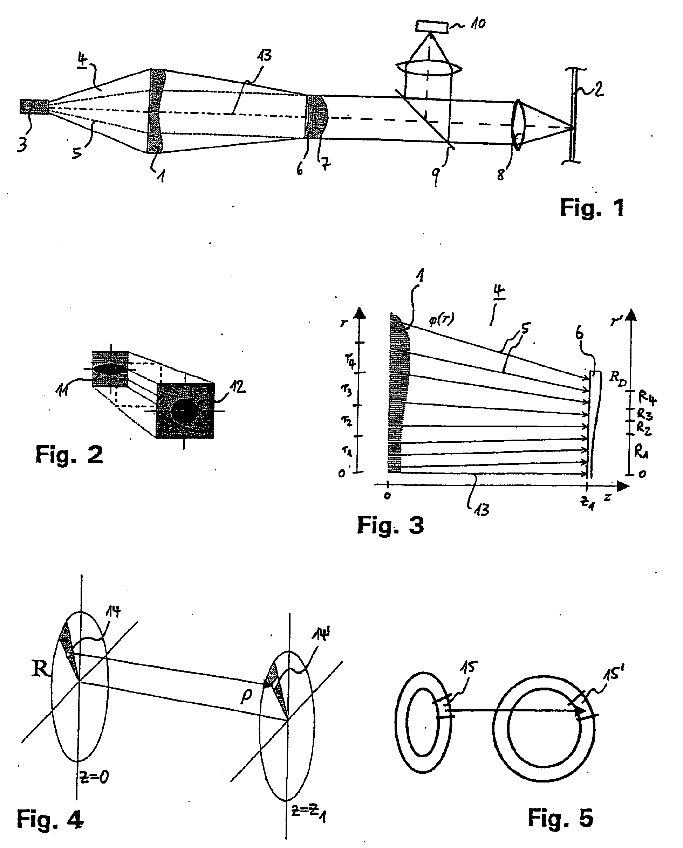

Fig. 1 zeigt ein Gerät mit einem Phasenelement 1. Das schematisch dargestellte Gerät ist ein Gerät zum Lesen und/oder Beschreiben optischer Aufzeichnungsträger 2. Derartige Geräte sind dem Fachmann bekannt, es werden daher nur einige wichtige Elemente beschrieben. Als Lichtquelle dient hier eine Halbleiter-Laserdiode 3, die ein divergentes Strahlenbündel 4 abgibt. Es weist elliptischen Querschnitt und eine inhomogene Dichteverteilung einzelner Strahlen 5 auf. Mittels des Phasenelements 1 wird die Dichteverteilung des Strahlenbündels 4 sowohl homogenisiert als auch symmetrisiert, d.h., innerhalb eines gegebenen Querschnitts wird eine gleichmäßige, homogene Strahlendichteverteilung erzielt und der unsymmetrische Querschnitt wird in einen symmetrischen, hier rotationssymmetrischen Querschnitt, umgewandelt. Ein Korrekturelement 6 korrigiert die Phase des homogenisierten und symmetrisierten Strahlenbündels. Es ist hier mit einer Kollimatorlinse 7 des Geräts gekoppelt dargestellt, beide Teile können aber auch einstückig ausgelegt sein. Nach Passieren der Kollimatorlinse 7 wird das Strahlenbündel mittels einer Objektivlinse 8 auf den optischen Aufzeichnungsträger 2 fokussiert, von diesem reflektiert und von einem halbdurchlässigen Spiegel 9 auf einen Photodetektor 10 gelenkt. Das Phasenelement 1 weist unterschiedliche Dicken an unterschiedlichen Orten auf, wobei die das Phasenelement 1 passierenden Strahlen das Phasenelement 1 mit unterschiedlich geänderter Phase verlassen. Das hier dargestellte Phasenelement 1 ist als plan/asphärisches Phasenelement dargestellt. Statt eines Phasenelements 1 kann auch eine Gitterstruktur eingesetzt werden, deren Gitterlinien lokal so verschoben sind, daß eine entsprechende Phasenänderung der einzelnen Strahlen des Strahlenbündels erzielt wird. Ein derartiges Gitter ist hier nicht dargestellt, es kann sowohl in Transmission als auch in Reflexion betrieben werden.

Fig. 2 zeigt in räumlicher Darstellung links oben beispielhaft den elliptischen Strahlquerschnitt 11 wie er vor Eintritt in das Phasenelement 1 aussieht und im rechten unteren Teil den rotationssymmetrischen Strahlenquerschnitt 12 wie er nach Verlassen des Korrekturelements 6 aussieht. Der gestrichelte Rahmen deutet den Ort an, an dem das Phasenelement 1 angeordnet ist. In dieser Darstellung nicht erkennbar ist die inhomogene Strahlendichte des elliptischen Strahlquerschnitts 11 sowie die homogene Strahlendichte des Strahlquerschnitts 12.

Fig. 3 zeigt die meridionale Umverteilung der Strahlen 5 des Strahlenbündels 4 zwischen Phasenelement 1 und Korrekturelement 6. Es ist dabei ein Schnitt entlang der optischen Achse 13 für einen festen Winkel dargestellt. Entlang der optischen Achse ist die Koordinate z aufgetragen, die vor dem Phasenelement 1 ihren Nullpunkt haben soll. Man erkennt, daß sich die Strahldichte für z=0 in Abhängigkeit vom Radius r inhomogen ändert. Für kleine Werte von r ist sie relativ hoch, während sie für große Werte von r abnimmt. Durch Umverteilung äquidistanter radialer Abschnitte $r_1$, $r_2$, $r_3$, $r_4$ auf nicht-äquidistante radiale Abschnitte $R_1$, $R_2$, $R_3$, $R_4$ im Abstand $z_1$ wird eine homogene Dichteverteilung der Strahlen 5 für den hier dargestellten festen Winkel erzielt.

Fig. 4 zeigt die meridionale Umverteilung der ersten Transformation des erfindungsgemäßen Verfahrens in schematischer räumlicher Darstellung. Links ist für z=0 ein Radiensegment 14 als schraffierter Winkelbereich gezeigt, das auf einen entsprechenden gleichen Winkelbereich für z=$z_1$, auf Radiensegment 14', abgebildet wird. Man erkennt, daß hier das markierte Radiensegment 14 mit r=R auf ein weiter außerhalb liegendes Radiensegment 14' mit R=$\rho$ abgebildet wird.

Fig. 5 zeigt in schematischer Darstellung die zweite erfindungsgemäße Transformation, bei der ein links dargestelltes Ellipsensegment oder Ringsegement 15 auf ein rechts dargestelltes Kreisringsegment 15' transformiert wird.

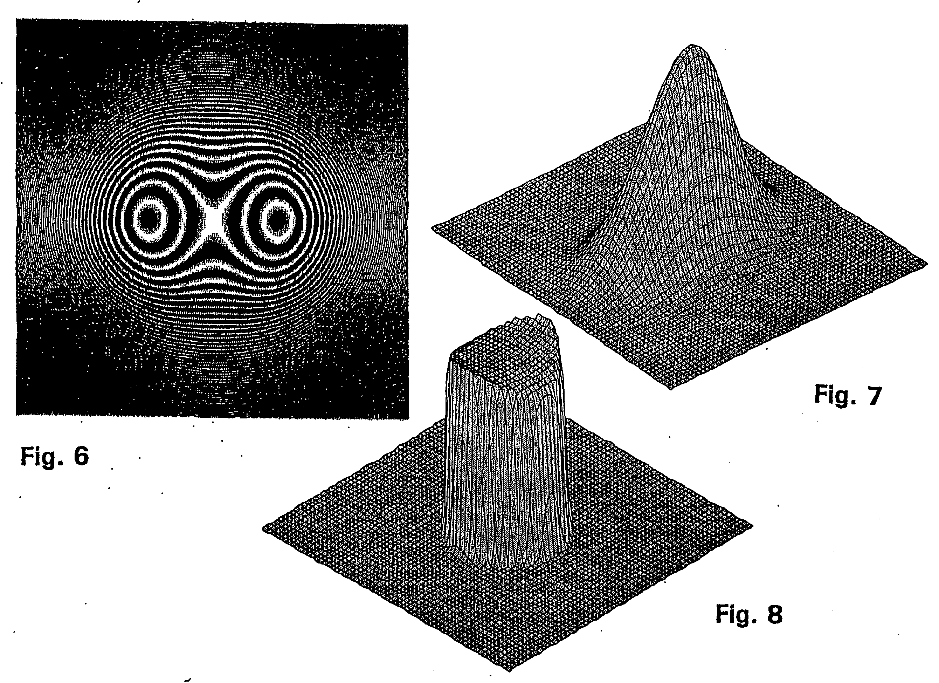

Fig. 6 zeigt eine Phasenverteilung, die gemäß dem erfindungsgemäßen Verfahren berechnet ist, in ebener, den Realteil zeigender Darstellung. Ausgangspunkt der Bestimmung dieser Phasenverteilung ist dabei ein astigmatisches Verhältnis der Halbachsen des elliptischen Strahlquerschnitts 11 von 3 zu 1, wobei die Halbachsen 1,8mm und 0,6mm betragen, der Durchmesser des Phasenelements 5,12 mm beträgt und die Homogenisierung in einem Abstand z=60mm vom Phasenelement 1 auftritt.

Die Ausgangsintensitätsverteilung ist in Fig. 7 in einem Pseudo-3D-Plot dargestellt. Man erkennt die inhomogene Intensitätsverteilung, die zudem nicht rotationssymmetrisch ist.

Fig. 8 zeigt die berechnete Zielintensitätsverteilung, die im wesentlichen kreisförmige Symmetrie aufweist und scharf abfallende Kanten hat. Es handelt sich hierbei um eine sehr gute sogenannte flat-top-Verteilung, die lediglich in Randbereichen geringfügige Abweichungen von der ansonsten homogenen Intensitäts-Verteilung aufweisen. Diese geringförmigen Abweichungen liegen u. a. daran, daß die vorliegende Berechnung strahlenoptisch erfolgt ist, während sich wellenoptisch gewisse Abweichungen dazu ergeben. Dies ist aber insbesondere im Fall des erfindungsgemäßen Geräts zum Lesen und/oder Beschreiben optischer Aufzeichnungsträger aus Fig. 1 unerheblich, da hierbei ein äußerer Bereich des flat-top-Profils durchaus ausgeblendet werden kann. Insbesondere beim Nachführen der Objektivlinse 8 zur Spurführung wird diese senkrecht zur optischen Achse 13 ausgelenkt. Auslenkung und Abschattung werden vorteilhafterweise so aufeinander abgestimmt, daß möglichst im gesamten Auslenkungsbereich ein möglichst gleichmäßiger Bereich des flat-top-Profils auf den Aufzeichnungsträger 2 fokussiert wird.

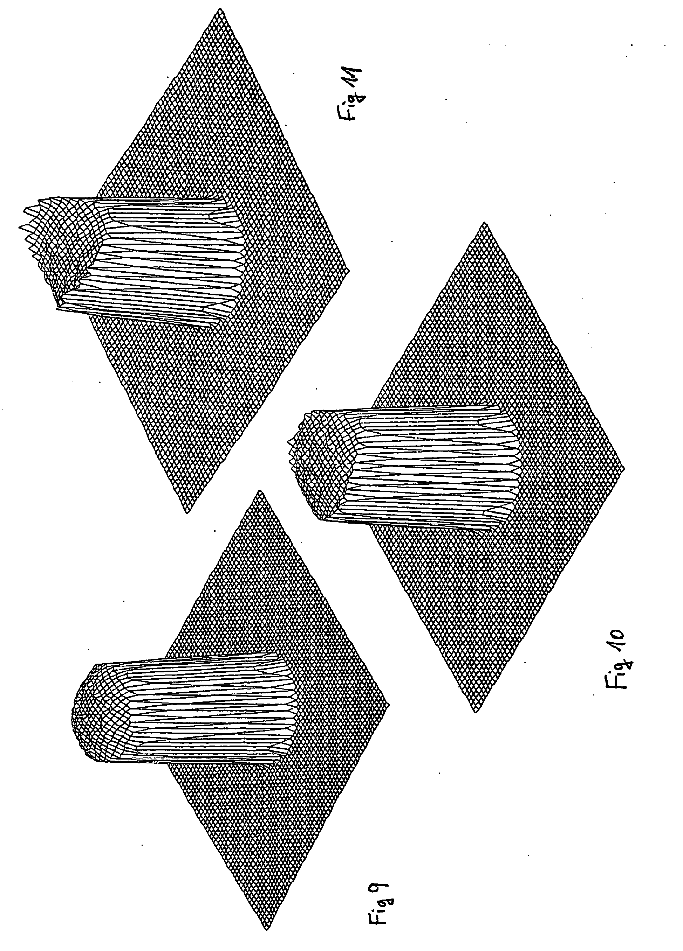

Es hat sich gezeigt, daß eine noch bessere flat-top-Verteilung erzielt wird, wenn die Berechnung mit leicht abweichenden Gaußparametern durchgeführt wird. So ergibt sich für eine elliptische Ausgangs-Strahlenverteilung mit Gaußparametern von 820$\mu$m und 1550$\mu$m eine optimierte flat-top-Verteilung, wenn zur Berechnung leicht geänderte Gaußparameter von 800$\mu$m und 1600$\mu$m verwendet werden. Fig. 9-11 zeigen Simulationen für einen konstanten ersten Gaußparameter von 800$\mu$m und tatsächlich vorhandene Gaußparameter von 800$\mu$m und 1600$\mu$m, wobei der zweite Gaußparameter zur Simulation variiert wurde. Für Fig. 9 sind 800$\mu$m und 1450$\mu$m, für Fig. 10 sind 800$\mu$m und 1500$\mu$m und für Fig. 11 sind 800$\mu$m und 1550$\mu$m verwendet worden. Man erkennt, daß die flat-top-Verteilung gemäß Fig. 10 diejenige ist, die dem Ziel am nächsten kommt. Eine weitere Optimierung läßt sich durch Variation des ersten Gaußparameters erzielen.

Im folgenden wird anhand der beschriebenen Figuren das erfindungsgemäße Entwurfsverfahren für den Fall einer elliptischen, gaußförmigen Ausgangs-Strahlendichte-Verteilung und einer rotationssymmetrischen flat-top-Zielverteilung dargestellt. Die gaußförmige Beleuchtungsintensität wird beschrieben durch

$$(1) \quad I_0(r,\varphi) = I_s\, e^{-2A(\varphi)r^2}$$

wobei mit

$$(2) \quad A(\varphi) = \left(\frac{\cos\varphi}{\sigma_x}\right)^2 + \left(\frac{\sin\varphi}{\sigma_y}\right)^2$$

die elliptische Gaußbreite berücksichtigt wird.

Die rotationssymmetrische flat-top-Zielverteilung kann dargestellt werden durch

$$(3) \quad I_1(\rho) = \begin{cases} \alpha\cdot I_s & \text{für} \quad \rho < \rho_{\max} \\ 0 & \text{sonst} \end{cases}$$

Der Intensitätsfaktor $\alpha$ folgt aus der Erhaltung der Gesamtleistung und ist demgemäß mit dem winkelabhängigen Radius der flat-top-Verteilung verknüpft

$$(4) \quad \alpha = \frac{1}{2\rho_{\max}^2(\varphi)A(\varphi)}$$

Da die Gesamtleistung in jedem Winkelsegment $\varphi$ der Ausgangsintensitätsverteilung unterschiedlich ist, wird der flat-top-Radius bei konstantem $\alpha$ winkelabhängig.

Für den ersten Schritt, der Homogenisierung durch meridionale Umverteilung, wird ein Winkelsegment $\delta\varphi$ bei z=0 der Fig. 3 auf dasselbe Winkelsegment in der Zielebene, also z=z$_1$ der Fig. 3, abgebildet. Die Umverteilung geschieht gemäß Strahlenoptik nur in radialer Richtung:

$$(5) \qquad \rho(r) = r + \frac{z}{k}\frac{\partial \phi}{\partial r}$$

Hierbei ist $r$ die Quellkoordinate, $z$ der Abstand zwischen dem optischen Phasenelement $\phi(\bar{r})$ und dem Schirm, wo die transformierte Verteilung beobachtet wird. In Fig. 3 entspricht dies dem Korrekturelement 6. Die von der Licht-wellenlänge abhängige Größe $k = \dfrac{2\pi}{\lambda}$ wird die Wellenzahl genannt.

Die Erhaltung der Leistung in jedem $r,\varphi$-Segment fordert, daß gilt:

$$(6) \qquad \int_0^r I_0(r',\varphi)\, r'\ dr' = \int_0^{\rho(r,\varphi)} I_1(\rho',\varphi)\, \rho'\ d\rho'$$

Das Winkelelement $d\varphi$ ist auf beiden Seiten dasselbe und ist daher gekürzt worden.

Diese Gleichung wird geschlossen nach $\rho(r,\varphi)$ aufgelöst:

$$(7) \qquad \rho(r,\varphi) = \rho_{\max}(\varphi)\sqrt{1 - e^{-2A(\varphi)r^2}}$$

Wegen der Beschränkung auf meridionale Umverteilung könnte die Phase aus Gleichung (5) direkt durch radiale Integration ermittelt werden. Das Element würde jedoch eine elliptische Gaußverteilung in eine entsprechende elliptische flat-top-Verteilung mit Radius $\rho_{\max}(\varphi) = \sqrt{\dfrac{1}{2\alpha\, A(\varphi)}}$ transformieren.

Im zweiten Schritt wird daher erfindungsgemäß eine weitere Koordinatentransformation eingeführt. Die weitere Beschreibung erfolgt nun zweidimensional, da die gesamte Transformation hierdurch nicht-meridional wird.

In dieser Darstellung lautet die erste Transformation:

$$(8) \qquad T_1: \begin{pmatrix} r\cdot\cos\varphi \\ r\cdot\sin\varphi \end{pmatrix} \rightarrow \begin{pmatrix} \rho(r,\varphi)\cdot\cos\varphi \\ \rho(r,\varphi)\cdot\sin\varphi \end{pmatrix}$$

mit $\rho(r,\varphi)$ aus Gleichung (7). Das Ziel der zweiten Transformation ist es, die elliptische flat-top-Verteilung in eine rotationssymmetrische Verteilung zu transformieren. Dies wird erreicht durch die Transformation:

$$(9) \qquad T_2: \begin{pmatrix} x \\ y \end{pmatrix} \rightarrow \begin{pmatrix} x \\ y\dfrac{\sigma_x}{\sigma_y} \end{pmatrix}$$

Die Transformation $T_2$ ist linear und repräsentiert eine Dehnung bzw. Stauchung in y-Richtung, je nach Wert des Faktors $\sigma_x/\sigma_y$. Sie wird wie folgt als Matrix geschrieben:

$$(10) \quad T_2 = \begin{pmatrix} 1 & 0 \\ 0 & \dfrac{\sigma_x}{\sigma_y} \end{pmatrix}$$

$T_2$ ist eine lineare Transformation mit ortsinvarianter Metrik, die Determinante det $(T_2) = 1 * \dfrac{\sigma_x}{\sigma_y} - 0 = const$

hängt nicht von x oder y ab. Für mehrere Transformationen $T_2,...,T_N$ gilt: Alle Transformationen der Form $T_1 \cdot T_2 \cdots T_N$ sind Gegenstand des erfindungsgemäßen Verfahrens, wenn $T_1$ eine meridionale Transformation ist und $T_2,...,T_N$ lineare Transformationen mit der Eigenschaft det($T_2 * ... * T_N$)=const sind.

Beispiel : $T_2 = T_{21} * T_{22}$ mit $T_{21} = \begin{pmatrix} 1 & 0 \\ 0 & \sigma_x \end{pmatrix}$; $T_{22} = \begin{pmatrix} 1 & 0 \\ 0 & 1/\sigma_y \end{pmatrix}$

Die Produkttransformation $T_1 \text{-} T_2$ läßt sich im hier betrachteten Fall gemäß Gleichung (9) und (10) zusammenfassen zur nichtmeridionalen Gesamttransformation

$$(11) \quad T: \quad \vec{r} = \begin{pmatrix} r \cdot \cos\varphi \\ r \cdot \sin\varphi \end{pmatrix} \rightarrow \bar{\rho}_2 = \begin{pmatrix} \rho_2 \cdot \cos\psi \\ \rho_2 \cdot \sin\psi \end{pmatrix}$$

mit den Beziehungen:

$$(12) \quad \rho_2 = \sigma_x \sqrt{\frac{1-e^{-2A(\varphi)r^2}}{2\alpha}} \ , \quad \psi = \text{atan}\left( \frac{\sigma_x}{\sigma_y}\,\varphi \right)$$

Für die Bestimmung der optischen Phase wird ausgegangen von der zweidimensionalen vektoriellen Beziehung

$$(13) \quad \vec{\rho}_2 = \vec{r} + \frac{z}{k}\bar{\nabla}\phi$$

Unter Verwendung der Darstellung des Gradienten in Polarkoordinaten

$$(14) \quad \vec{\nabla}\phi = \frac{\partial\phi}{\partial r}\vec{e}_r + \frac{1}{r}\frac{\partial\phi}{\partial\varphi}\vec{e}_\varphi$$

gelten mit Gleichung (13) die partiellen Ableitungen:

$$(15) \quad \frac{\partial\phi}{\partial r} = \frac{k}{z}\left(\bar{\rho}_2 - \vec{r}\right)\vec{e}_r \ , \quad \frac{\partial\phi}{\partial\varphi} = \frac{kr}{z}\left(\bar{\rho}_2 - \vec{r}\right)\vec{e}_\varphi$$

Die Phase wird im zweidimensionalen Fall durch Integration über einen Pfad bestimmt:

$$(16) \quad \phi(r,\varphi) = \int_{Pfad} \vec{\nabla}\phi \; d\vec{s}$$

Dieses Integral ist wegunabhängig, es wird daher ein Pfad von r=0 in radialer Richtung gewählt. Die Phase wird ermittelt aus dem Integral

$$(17) \quad \phi(r,\varphi) = \frac{k}{z}\int_0^r \rho_2(r',\varphi)\cos(\psi(r',\varphi)-\varphi)\,dr' - \frac{kr^2}{2z}$$

Dabei sind r und φ die Polarkoordinaten Ort z=0 des Phasenelements, k und z wie nach Gleichung (5) bereits beschrieben.
Die Höhenverteilung des Phasenelements 1 wird aus der Formel

$$(18) \quad \phi(R,\varphi) = k \cdot \Delta n \cdot h(R,\varphi)$$

bestimmt. Dabei ist h(R,φ) die Höhe des Phasenelements in Polarkoordinaten, k ist die Wellenzahl und Δn ist der Brechungszahlunterschied an der Grenze des Phasenelements. Man erkennt, daß sowohl in Formel (19) als auch in Formel (20) die Wellenlängenabhängigkeit über die Wellenzahl k bei der Bestimmung des Höhenverteilungsprofils des Phasenelements 1 herausfällt. Lediglich über den Brechungszahlunterschied Δn kann eine geringfügige Wellenlängenabhängigkeit auftreten, die allerdings für den Anwendungsfall Strahlformung von Halbleiter-Laserlicht nicht zum Tragen kommt.
Ein erfindungsgemäßes Phasenelement transformiert ein Strahlenbündel mit einer ersten beliebigen inhomogenen Intensitätsverteilung $I_0$, die weder eindimensional noch rotationssymmetrisch ist, in ein Strahlenbündel mit einer zweiten inhomogenen Intensitätsverteilung $I_1$. Dabei ist die Transformation von Quellorten $(x_0,y_0)$ der ersten Intensitätsverteilung $I_0$ in Zielorte $(x_1,y_1)$ der zweiten Intensitätsverteilung $I_1$ des Strahlenbündels als eine Hintereinanderausführung einer eindimensionalen Transformatio: TE oder einer rotationssymmetrischen Transformation TR und einer linearen Transformation TL darstellbar.
Neu an dieser Erfindung ist die Kombination von zwei Funktionen in einem einzigen Element. Neu ist insbesondere auch das Entwurfsverfahren, das es innerhalb von Grenzen gestattet, beliebige Helligkeitsprofile in neue, gewünschte umzuwandeln.
Der Vorteil der Erfindung ergibt sich sofort aus dem Nachteil der bisherigen Verfahren. Da das Element bereits verschiedene Funktionen in sich vereint, ist der Montageaufwand wesentlich geringer. Das Element kann überall dort nutzbringend eingesetzt werden, wo eine homogene Lichtverteilung für die Anwendung nötig ist. Dies ist nicht nur für den sogenannten Pickup (den Schreib-Lese-Kopf) in der optischen Speicherung, sondern auch in der Beleuchtungstechnik oder beim Laserschweißen der Fall.

**Patentansprüche**

1. Beleuchtungssystem mit einem kollimierten Halbleiterlaser zum Erzeugen eines ersten Strahlenbündels mit einer ersten Intensitätsverteilung ($I_0$) und einem Phasenelement zum Transformieren des ersten Strahlenbündels in ein zweites Strahlenbündel mit einer zweiten Intensitätsverteilung ($I_1$), wobei

   - die erste Intensitätsverteilung ($I_0$) eine elliptische Gauß'sche Intensitätsverteilung ist, mit

$$I_0(r,\varphi) = I_s \cdot \exp\left(-2r^2 A(\varphi)\right),$$

   wobei r und φ die ebenen Polarkoordinaten in der Ebene des Phaselements und

$$A(\varphi) = \left(\frac{\cos(\varphi)}{\sigma_x}\right)^2 + \left(\frac{\sin(\varphi)}{\sigma_y}\right)^2$$

sind, mit
$\sigma_x \neq \sigma_y$ ;
- die zweite Intensitätsverteilung ($I_1$) eine homogene rotationssymmetrische Intensitätsverteilung ist, mit

$$I_1(\rho) = \begin{cases} \alpha \cdot I_S & \text{für} \quad \rho < \rho_{max} \\ 0 & \text{sonst} \end{cases},$$

wobei
$\alpha$ eine Konstante, $I_S$ eine konstante Intensität, $\rho$ der Radius in der Ebene der zweiten Intensitätsverteilung und $\rho_{max}$ der maximale Radius der zweiten Intensitätsverteilung ist;
- der Abstand der Ebene der ersten Intensitätsverteilung zur Ebene der zweiten Intensitätsverteilung $z$ ist;

- die Wellenlänge des Halbleiterlasers $\lambda = \dfrac{2\pi}{k}$ ist;

- das Phasenelement dem ersten Strahlenbündel eine Phasenverteilung ($\phi$) aufprägt, welche in paraxialer Näherung durch das Pfadintegral

$$\phi(r,\varphi) = \frac{k}{z}\left(\frac{\cos^2(\varphi) + \frac{\sigma_x}{\sigma_y}\sin^2(\varphi)}{\sqrt{2 \cdot \alpha \cdot A(\varphi)}} \int_0^r \sqrt{1 - \exp(-2r'^2 \cdot A(\varphi))}\,dr' - \frac{r^2}{2}\right)$$

entlang eines radialen Pfades berechnet wird;
- das Phasenelement einstückig als holographisches, refraktives oder spiegelndes Element gebildet ist.

2. Gerät zum Lesen und/oder Beschreiben optischer Aufzeichnungsträger (2) aufweisend ein Beleuchtungsystem gemäß Anspruch 1.

3. Gerät nach Anspruch 2, **dadurch gekennzeichnet, dass** es ein Korrekturelement (6) zum Parallelisieren aufweist.

4. Entwurfsverfahren zum Bestimmen der Phasenverteilung eines Phasenelements in eimem Beleuchtungssystem mit einem kollimierten Halbleiterlaser zum Erzeugen eines ersten Strahlenbündels mit einer ersten Intensitätsverteilung ($I_0$) und einem Phasenelement zum Tansformieren des ersten Strahlenbündels in ein zweites Strahlenbündel mit einer zweiten Intensitätsverteilung ($I_1$), wobei

- die erste Intensitätsverteilung ($I_0$) eine elliptische Gauß'sche Intensitätsverteilung ist, mit

$$I_0(r,\varphi) = I_S \cdot \exp(-2r^2 A(\varphi)),$$

wobei r and $\varphi$ die ebenen Polarkoodinaten in der Ebene des Phasenelements und

$$A(\varphi) = \left( \frac{\cos(\varphi)}{\sigma_x} \right)^2 + \left( \frac{\sin(\varphi)}{\sigma_y} \right)^2$$

sind, mit
$\sigma_x \neq \sigma_y$;
- die zweite Intensitätsverteilung ($I_1$) eine homogene rotationssymmetrische Intersitätsverteilung ist, mit

$$I_1(\rho) = \begin{cases} \alpha \cdot I_S & \text{für} \quad \rho < \rho_{\text{max}} \\ 0 & \text{sonst} \end{cases},$$

wobei $\alpha$ eine Konstante, $I_S$ eine konstante Intensität, $\rho$ der Radius in der Ebene der zweiten Intensitätsverteilung und $\rho_{\text{max}}$ der maximale Radius der zweiten Intensitätsverteilung ist;

- der Abstand der Ebene der ersten Intensitätsverteilung zur Ebene der zweiten Intensitätsverteilung $z$ ist;

- die Wellenlänge des Halbleiterlasers $\lambda = \dfrac{2\pi}{k}$ ist;

- das Phasenelement dem ersten Strahlenbündel eine Phasenverteilung ($\phi$) aufprägt, welche in paraxialer Näherung durch das Pfadintegral

$$\phi(r,\varphi) = \frac{k}{z} \left( \frac{\cos^2(\varphi) + \frac{\sigma_x}{\sigma_y}\sin^2(\varphi)}{\sqrt{2 \cdot \alpha \cdot A(\varphi)}} \int_0^r \sqrt{1 - \exp(-2r'^2 \cdot A(\varphi))}\, dr' - \frac{r^2}{2} \right)$$

entlang eines radialen Pfades berechnet wird;
- das Phasenelement einstückig als holographisches, refraktives oder spiegelndes Element gebildet ist.

**Claims**

1.  Illumination system with a collimated semiconductor laser for generating a first beam of rays with a first intensity distribution ($I_0$) and a phase element for transforming the first beam of rays into a second beam of rays with a second intensity distribution ($I_1$), wherein

    - the first intensity distribution ($I_0$) is an elliptical Gaussian intensity distribution, with

$$I_0(r,\varphi) = I_S e^{-2A(\varphi) r^2},$$

    where $r$ and $\varphi$ are the plane polar coordinates in the plane of the phase element and

$$A(\varphi) = \left( \frac{\cos \varphi}{\sigma_x} \right)^2 + \left( \frac{\sin \varphi}{\sigma_y} \right)^2,$$

    with $\sigma_x \neq \sigma_y$;

    - the second intensity distribution ($I_1$) is a homogeneous rotationally symmetrical intensity distribution with

$$I_1(\rho) = \begin{cases} \alpha \cdot I_s & \text{for } \rho < \rho_{max} \\ 0 & \text{otherwise} \end{cases},$$

where $\alpha$ is a constant, $I_S$ is a constant intensity, $\rho$ is the radius in the plane of the second intensity distribution, and $\rho_{max}$ is the maximum radius of the second intensity distribution;

- the distance between the plane of the first intensity distribution and the plane of the second intensity distribution is $z$;

- the wavelength of the semiconductor laser is $\lambda = \dfrac{2\pi}{k}$ ;

- the phase element impresses a phase distribution ($\phi$) on the first beam of rays, which in paraxial approximation is calculated by the path integral

$$\phi(r,\varphi) = \frac{k}{z}\left( \frac{\cos^2(\varphi) + \frac{\sigma_x}{\sigma_y}\sin^2(\varphi)}{\sqrt{2\alpha A(\varphi)}} \int_0^r \sqrt{1 - \exp(-2r'^2 A(\varphi))}\, dr' - \frac{r^2}{2} \right)$$

along a radial path;
- the phase element is a single piece holographic, refractive, or reflective element.

2. Apparatus for reading from and/or writing to optical recording media (2) having an illumination system according to claim 1.

3. Apparatus according to claim 2, **characterized in that** it has a correction element (6) for parallelization.

4. Design method for determining the phase distribution of a phase element in an illumination system with a collimated semiconductor laser for generating a first beam of rays with a first intensity distribution ($I_0$) and a phase element for transforming the first beam of rays into a second beam of rays with a second intensity distribution ($I_1$), wherein

- the first intensity distribution ($I_0$) is an elliptical Gaussian intensity distribution, with

$$I_0(r,\varphi) = I_S e^{-2A(\varphi)r^2},$$

where $r$ and $\varphi$ are the plane polar coordinates in the plane of the phase element and

$$A(\varphi) = \left(\frac{\cos\varphi}{\sigma_x}\right)^2 + \left(\frac{\sin\varphi}{\sigma_y}\right)^2,$$

with $\sigma_x \neq \sigma_y$;
- the second intensity distribution ($I_1$) is a homogeneous rotationally symmetrical intensity distribution with

$$I_1(\rho) = \begin{cases} \alpha \cdot I_s & \text{for } \rho < \rho_{max} \\ 0 & \text{otherwise} \end{cases},$$

where $\alpha$ is a constant, $I_S$ is a constant intensity, $\rho$ is the radius in the plane of the second intensity distribution, and $\rho_{max}$ is the maximum radius of the second intensity distribution;

- the distance between the plane of the first intensity distribution and the plane of the second intensity distribution is $z$;

- the wavelength of the semiconductor laser is $\lambda = \dfrac{2\pi}{k}$ ;

- the phase element impresses a phase distribution ($\phi$) on the first beam of rays, which in paraxial approximation is calculated by the path integral

$$\phi(r,\varphi) = \frac{k}{z}\left(\frac{\cos^2(\varphi)+\frac{\sigma_x}{\sigma_y}\sin^2(\varphi)}{\sqrt{2\alpha A(\varphi)}}\int_0^r\sqrt{1-\exp\left(-2r'^2A(\varphi)\right)}\,dr'-\frac{r^2}{2}\right)$$

along a radial path;
- the phase element is a single piece holographic, refractive, or reflective element.

**Revendications**

1. Système d'éclairage muni d'un laser à semiconducteur collimaté pour générer un premier faisceau de rayons présentant une première distribution de l'intensité ($I_0$) et d'un élément de phase pour transformer le premier faisceau de rayons en deuxième faisceau de rayons présentant une deuxième distribution de l'intensité ($I_1$), où

    - la première distribution de l'intensité ($I_0$) est une distribution gaussienne et elliptique de l'intensité, avec

    - $I_0(r,\varphi) = I_S e^{-2A(\varphi)r^2}$, où $r$ et $\varphi$ sont les coordonnées polaires planes dans le plan de l'élément de phase et

    - $A(\varphi) = \left(\dfrac{\cos\varphi}{\sigma_x}\right)^2 + \left(\dfrac{\sin\varphi}{\sigma_y}\right)^2$, avec $\sigma_x \neq \sigma_y$;

    - la deuxième distribution de l'intensité ($I_1$) est une distribution de l'intensité homogène et symétrique par rotation, avec

    $I_1(\rho) = \begin{cases} \alpha \cdot I_S & \text{pour } \rho < \rho_{max} \\ 0 & \text{sinon} \end{cases}$, où $\alpha$ est une constante, $I_S$ une intensité constante, $\rho$ le rayon dans le plan de la deuxième distribution de l'intensité et $\rho_{max}$ le rayon maximal de la deuxième distribution de l'intensité ;

    - la distance entre le plan de la première distribution de l'intensité et le plan de la deuxième distribution de l'intensité est $z$ ;

    - la longueur d'onde du laser à semiconducteur est $\lambda = \dfrac{2\pi}{k}$ ;

    - l'élément de phase marque une distribution de phase ($\phi$) sur le premier faisceau de rayons, qui, dans l'approximation paraxiale, est calculée par l'intégrale de la trajectoire

$$\phi(r,\varphi) = \frac{k}{z}\left(\frac{\cos^2(\varphi)+\frac{\sigma_x}{\sigma_y}\sin^2(\varphi)}{\sqrt{2\alpha A(\varphi)}}\int_0^r\sqrt{1-\exp\left(-2r'^2A(\varphi)\right)}\,dr'-\frac{r^2}{2}\right)$$

le long d'une trajectoire radiale ;
    - l'élément de phase est un élément holographique, réfractif ou spéculaire d'un seul tenant.

2. Appareil permettant de lire et/ou d'écrire sur un support d'enregistrement optique (2) comportant un système d'éclairage selon la revendication 1.

3. Appareil selon la revendication 2, **caractérisé en ce qu'**il comporte un élément de correction (6) pour effectuer la parallélisation.

4. Méthode de conception permettant de déterminer la distribution de l'intensité d'un élément de phase dans un système d'éclairage muni d'un laser à semiconducteur collimaté pour générer un premier faisceau de rayons présentant une première distribution de l'intensité ($I_0$) et d'un élément de phase pour transformer le premier faisceau de rayons en deuxième faisceau de rayons présentant une deuxième distribution de l'intensité ($I_1$), où

    - la première distribution de l'intensité ($I_0$) est une distribution gaussienne et elliptique de l'intensité, avec

    $I_0(r,\varphi) = I_S e^{-2A(\varphi)r^2}$, où $r$ et $\varphi$ sont les coordonnées polaires planes dans le plan de l'élément de phase et

    $A(\varphi) = \left(\dfrac{\cos\varphi}{\sigma_x}\right)^2 + \left(\dfrac{\sin\varphi}{\sigma_y}\right)^2$, avec $\sigma_x \neq \sigma_y$;

    - la deuxième distribution de l'intensité ($I_1$) est une distribution de l'intensité homogène et symétrique par rotation avec

**EP 1 370 896 B1**

$$I_1(\rho) = \begin{cases} \alpha \cdot I_S & \text{pour } \rho < \rho_{max} \\ 0 & \text{sinon} \end{cases}$$, où $\alpha$ est une constante, $I_S$ une intensité constante, $\rho$ le rayon dans le plan de la deuxième distribution de l'intensité et $\rho_{max}$ le rayon maximal de la deuxième distribution de l'intensité ;

- la distance entre le plan de la première distribution de l'intensité et le plan de la deuxième distribution de l'intensité est z ;

- la longueur d'onde du laser à semiconducteur est $\lambda = \dfrac{2\pi}{k}$ ;

- l'élément de phase marque une distribution de phase ($\phi$) sur le premier faisceau de rayons, qui, dans l'approximation paraxiale, est calculée par l'intégrale de la trajectoire

$$\phi(r,\varphi) = \frac{k}{z}\left( \frac{\cos^2(\varphi) + \frac{\sigma_x}{\sigma_y}\sin^2(\varphi)}{\sqrt{2\alpha A(\varphi)}} \int_0^r \sqrt{1 - \exp\left(-2r'^2 A(\varphi)\right)}\, dr' - \frac{r^2}{2} \right)$$

le long d'une trajectoire radiale ;
- l'élément de phase est un élément holographique, réfractif ou spéculaire d'un seul tenant.

Fig. 1

Fig. 2

Fig. 3

Fig. 4

Fig. 5

Fig. 7

Fig. 8

Fig. 6

Fig 11

Fig 10

Fig 9